# EUROPEAN PATENT APPLICATION

(11) **EP 4 613 531 A1**
(43) Date of publication of application: **10.09.2025**
(21) Application number: 25162207.2
(22) Date of filing: 06.03.2025
(51) Int. Cl.: B60K 28/06, B60W 10/18, B60W 10/20, B60W 30/09

(54) **CONTROL DEVICE FOR VEHICLE, CONTROL METHOD FOR VEHICLE, AND COMPUTER PROGRAM**

(30) Priority: 08.03.2024 JP 2024036371
(71) Applicant: TOYOTA JIDOSHA KABUSHIKI KAISHA, Toyota-shi, Aichi-ken 471-8571 (JP)
(72) Inventor: SATO, Minami, Toyota-shi, Aichi-ken 471-8571 (JP); WADA, Mitsuo, Toyota-shi, Aichi-ken 471-8571 (JP)
(74) Representative: Cabinet Beau de Loménie

(57) **Abstract**

A control device (6) is configured to perform driver assist accompanied with running control of a vehicle (100) when a specific object in surroundings of the vehicle (100) is present in a driver assist area set in the surroundings of the vehicle (100) and change an amount of steering assist included in the running control in accordance with an ease of recovery from a state unsuitable for driving to a suitable state when a driver of the vehicle (100) is in an unsuitable state.

## Description

### FIELD

The present invention relates to a control device for a vehicle, a control method for a vehicle, and a computer program.

### BACKGROUND

WO2019/058446 discloses a conventional control device for a vehicle configured to perform driver assist for avoiding contact between the vehicle and a crossing pedestrian crossing a road.

### SUMMARY

However, in the above-mentioned conventional control device for a vehicle, when performing driver assist, no consideration was given to the situation after performing that driver assist. For this reason, depending on the state of the driver at the time of driver assist, a new risk was liable to arise after performing the driver assist.

The present invention was made focusing on such a problem and has as its object performing suitable driver assist considering the situation after performing that driver assist.

To solve the above problem, a control device for a vehicle according to one aspect of the present disclosure is to perform driver assist accompanied with running control of the vehicle when a specific object in surroundings of the vehicle is present in a driver assist area set in the surroundings of the vehicle and change an amount of steering assist included in the running control in accordance with an ease of recovery from a state unsuitable for driving to a suitable state when a driver of the vehicle is in an unsuitable state.

Further, a control method for a vehicle according to one aspect of the present disclosure includes performing driver assist accompanied with running control of the vehicle when a specific object in surroundings of the vehicle is present in a driver assist area set in the surroundings of the vehicle and changing an amount of steering assist included in the running control in accordance with an ease of recovery from a state unsuitable for driving to a suitable state when a driver of the vehicle is in an unsuitable state.

Further, a computer program product according to one aspect of the present invention makes a computer run processing for performing driver assist accompanied with running control of a vehicle when a specific object in surroundings of the vehicle is present in a driver assist area set in the surroundings of the vehicle and changing an amount of steering assist included in the running control in accordance with an ease of recovery from a state unsuitable for driving to a suitable state when a driver of the vehicle is in an unsuitable state.

According to these aspects of the present invention, it is possible to perform suitable driver assist considering the situation after performing that driver assist.

### BRIEF DESCRIPTION OF DRAWINGS

FIG. 1 is a schematic view of the configuration of a vehicle according to one embodiment of the present invention.
FIG. 2A is a view for explaining a method of judgment of whether a driver is in a state of distracted driving.
FIG. 2B is a view for explaining a method of judgment of whether a driver is in a state of distracted driving.
FIG. 3 is a view for showing one example of a driver assist area set in advance in the surroundings of a vehicle.
FIG. 4 is a view for showing one example of a scene in which steering assist is performed as driver assist.
FIG. 5 is a view for showing one example of a scene in which steering assist and brake assist are performed as driver assist.
FIG. 6 is a view for showing one example of a scene in which brake assist is performed as driver assist.
FIG. 7 is a flow chart for explaining driver assist control according to one embodiment of the present invention.

### DESCRIPTION OF EMBODIMENTS

Below, referring to the drawings, embodiments of the present invention will be explained in detail. Note that, in the following explanation, similar component elements will be assigned the same reference notations.

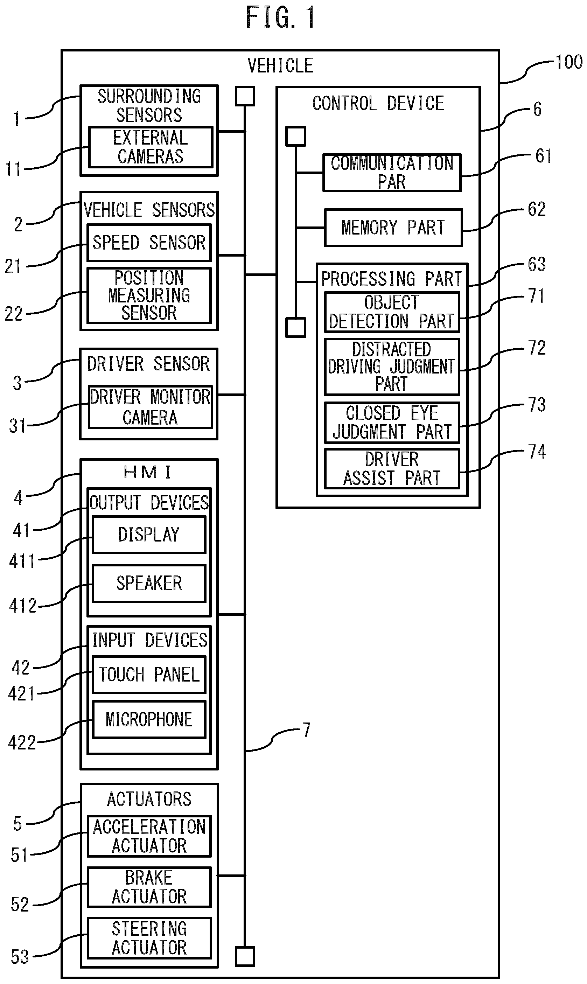

FIG. 1 is a schematic view of the configuration of a vehicle 100 according to one embodiment of the present invention.

The vehicle 100 is provided with surrounding sensors 1, vehicle sensors 2, driver sensors 3, an HMI (human machine interface) 4, an actuator 5, and a control device 6. The surrounding sensors 1, vehicle sensors 2, driver sensors 3, HMI 4, actuators 5, and the control device 6 are connected to be able to communicate through an internal vehicle network 7 based on a standard such as a Control Area Network.

The surrounding sensors 1 are sensors for generating surrounding data showing the situation in the surroundings of the vehicle 100. In the present embodiment, as the surrounding sensors 1, one or more external cameras 11 for capturing the surroundings of the vehicle 100 including the area in front of the vehicle 100 are provided. The external cameras 11 capture the surroundings of the vehicle 100 by a predetermined frame rate (for example, 10Hz to 40Hz) and generate surrounding images showing the surroundings of the vehicle 100. The external cameras 11 send the generated surrounding images as surrounding data to the control device 6 each time generating the surrounding images.

Note that, instead of the external cameras 11 or in addition to the external cameras 11, a distance measuring sensor for measuring the distance to a vehicle, pedestrian, or other object present in the surroundings of the vehicle 100 may be provided as a surrounding sensor 1. As examples of distance measuring sensors, for example, a lidar (light detection and ranging) device emitting laser light and measuring a distance based on the reflected light, a millimeter wave radar sensor emitting an electrical wave and measuring a distance based on its reflected wave, etc. may be mentioned.

The vehicle sensors 2 are sensors for generating vehicle data showing the state of the vehicle 100. In the present embodiment, as the vehicle sensors 2, for example, a speed sensor 21 for generating speed data showing the running speed of the vehicle 100, a position measuring sensor 22 for generating a latitude and longitude or other current position data showing a current position of the vehicle 100, etc. are provided. However, the vehicle sensors 2 are not limited to these sensors. The data acquired by the vehicle sensors 2 is sent as vehicle data to the control device 6.

The driver sensor 3 is a sensor for generating driver data showing the state of the driver. In the present embodiment, as the driver sensor 3, a driver monitor camera 31 for capturing the appearance of the driver including the face of the driver is provided. The driver monitor camera 31 captures the appearance of the driver by a predetermined frame rate (for example, 10 Hz to 40 Hz) and generates appearance image showing the appearance of the driver. Each time the driver monitor camera 31 generates an appearance image of the driver, it sends the generated appearance image as driver data to the control device 6.

The HMI 4 is a user interface for transfer of information between the vehicle 100 and its occupants. The HMI 4 is provided with output devices 41 for providing notifications to the vehicle occupants through the physical senses (for example, sight, hearing, touch, etc.) of the vehicle occupants and input devices 42 for the vehicle occupants to perform input operations and response operations. In the present embodiment, as output devices 41, a display (for example, meter display, center display, heads-up display, etc.) and speakers are provided. As the input devices 42, a touch panel and microphone are provided.

The HMI 4 displays information (for example, text information or graphic information) corresponding to a display signal received from the control device 6 on the display and outputs audio corresponding to an audio signal from the speakers. Further, the HMI 4 sends data input by the touch panel or input by voice by the vehicle occupant through the input devices 42 to the control device 6.

The HMI 4 may be mounted in the vehicle 100 in advance or may be a smartphone or other terminal held by a vehicle occupant. In the latter case, for example, information may be transferred by short distance wireless between the vehicle 100 and terminal of the vehicle occupant, the terminal of the vehicle occupant and an outside server (not shown) may communicate with each other, and information may be transferred indirectly through the server.

The actuators 5 are devices used for controlling operations of the vehicle 100. In the present embodiment, as the actuators 5, acceleration actuators 51 for controlling acceleration of the vehicle 100 (for example, at least one of the engine and motor), brake actuators 52 for controlling braking of the vehicle 100 (for example, a hydraulic actuator), and steering actuators 53 for controlling steering of the vehicle 100 (for example, a steering motor) are provided.

The control device 6 is an ECU (electronic control unit) provided with a communication part 61, storage part 62, and processing part 63.

The communication part 61 has a communicate interface circuit for connecting the control device 6 to the internal vehicle network 7. The communication part 61 supplies the various data received from the sensors 1to 3 and the HMI 4, etc. to the processing part 63. Further, the communication part 61 outputs the various signals output from the processing part 63 to the HMI 4 and the actuators 5, etc.

The storage part 62 has an HDD (hard disk drive), SSD (solid state drive), semiconductor memory, or other storage medium and stores various computer programs and data etc. used for processing at the processing part 63.

The processing part 63 has one or more CPUs (central processing units) and their peripheral circuits and runs various computer programs stored in the storage part 62. The processing part 63 is for examples a processor. The processor may further have other processing circuits such as a logical operation unit, numerical operation unit, or graphic processing unit. The processing part 63 performs processing according to a computer program to thereby function as an object detection part 71, distracted driving judgment part 72, closed eye judgment part 73, and driver assist part 74 and operates as function parts (modules) for realizing predetermined functions. In the following explanation, if explaining processing focused on the functions 71 to 74, this shows that the processing part 63 is running a program for realizing the function parts 71 to 74.

Below, the content of the specific processing performed at the control device 6 will be explained. That is, the content of the function parts 71-74 realized by the processing part 63 performing processing in accordance with the programs will be explained.

The object detection part 71 detects an object present in the surroundings of the vehicle 100 based on the surrounding data. The object detection part 71, for example, successively inputs surrounding images received from the external cameras 11 to a discriminator to thereby detect regions in which surrounding images, vehicles, two-wheeled vehicles, pedestrians, buildings, or other objects are shown and the types of objects shown in that regions. The discriminator can, for example, be made a convolutional neural network (CNN) having a plurality of convolution layers connected in series from the input side to the output side. The object detection part 71 uses the standard size of an object stored in the memory part 62 for each type of object and the size of an object detected in a surrounding image to estimate the distance from an external camera 11 to an object and tracks the object detected in the surrounding image along a time series to calculate a position and speed of an object. Note that, the method of detection of an object is not limited to such a method. Various known techniques may be used for detection.

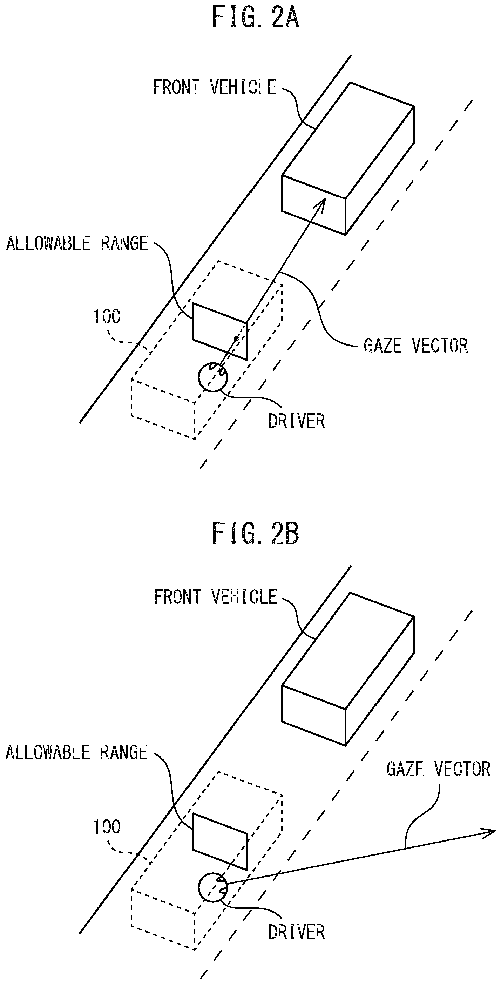

The distracted driving judgment part 72 judges whether the driver is in the state of distracted driving, one example in the state unsuitable for driving, based on the driver data. The method of judgment that the driver is in the state of distracted driving is not particularly limited, but, in the present embodiment, the distracted driving judgment part 72 detects the facial orientation or gaze direction of the driver based on the driver appearance image received from the driver monitor camera 31 and, as shown in FIG. 2A, judges that the driver is not in the state of distracted driving if the gaze vector extending toward the direction of facial orientation of the driver or the gaze vector extending from the position of the eye of the driver (viewpoint position) toward the gaze direction passes through an allowable range virtually set at a predetermined position at the front in the direction of vehicle advance and having a predetermined height and width. Further, as shown in FIG. 2B, if the gaze vector does not pass through the allowable range, it is judged that the driver is in the state of distracted driving.

Note that, the distracted driving judgment part 72, for example, can analyze the appearance image of a driver to detect the portions of the eyes, nose, mouth, or other features of the face of the driver and compare the positions of these against 3D models of standard faces stored in the memory part 62 to detect the facial orientation of the 3D model with portions of facial features matching the most as the facial orientation of the driver. Further, the distracted driving judgment part 72, for example, can analyze the appearance image of the driver to detect the position of the center of a pupil as a moving point (that is, the viewpoint position of the driver) and the position of the Purkinje image (cornea reflected image) used as the reference point and detect the gaze direction of the driver based on the positional relationship of the Purkinje image and pupil center (position of moving point with respect to reference point).

The closed eye judgment part 73 judges whether the driver is in a closed eye state, one example of a state unsuitable for driving, based on the driver data. The method for judging whether the driver is in a closed eye state is not particularly limited, but, in the present embodiment, the closed eye judgment part 73 analyzes the driver appearance image received from the driver monitor camera 31 to detect the opening/closing state of the eyes of the driver and, if the state where the driver has closed his eyes continues for greater than or equal to a predetermined time, judges that the driver is in a closed eye state.

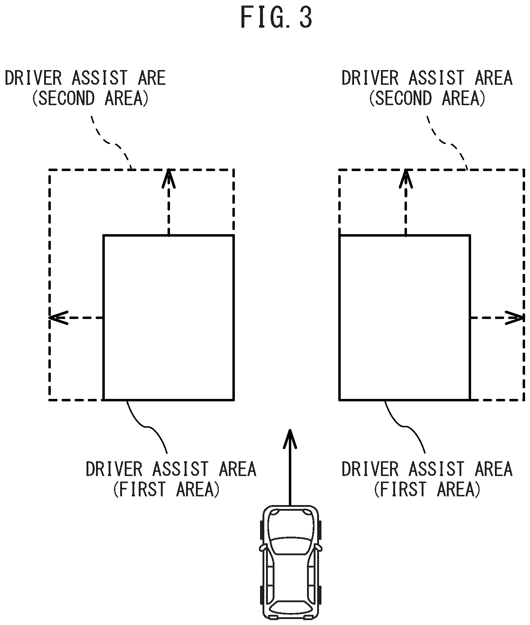

If there is a pedestrian or two-wheeled vehicle, parked vehicle, or other specific object present in a driver assist area (see FIG. 3) preset in the surroundings of the vehicle 100, the driver assist part 74 performs driver assist for avoiding a collision with that specific object or a moving body which may be present hidden behind a parked vehicle (for example, a pedestrian), a person who is liable to get out from a parked vehicle, etc., that is, a collision due to a specific object present in the driver assist area. In the present embodiment, the driver assist part 74 performs at least one of driver assist accompanied with steering control (below, referred to as "steering assist") and driver assist accompanied with brake control (below, referred to as "brake assist") as driver assist for avoiding a collision due to a specific object present in the driver assist area. Naturally, it is also possible to make announcements etc. through the HMI 4 together with these drive assists. Steering assist is driver assist for controlling the steering actuator 53 to automatically perform a steering operation of the vehicle 100. Brake assist is driver assist for controlling the brake actuator 52 to automatically perform a brake operation of the vehicle 100.

Below, referring to FIG. 3 to FIG. 6, driver assist by the driver assist part 74 will be explained in further detail.

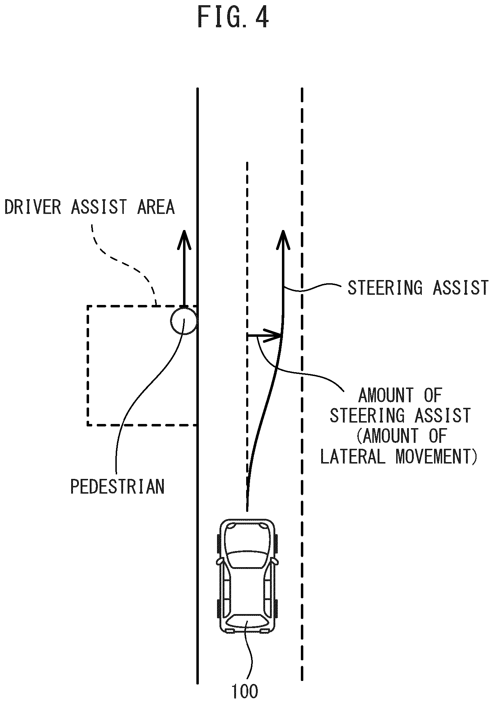

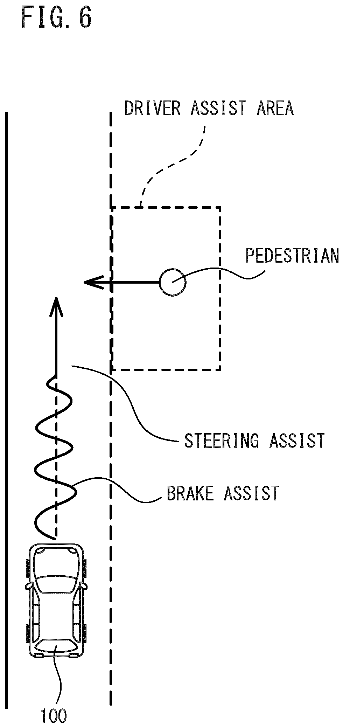

FIG. 3 is a view for showing one example of a driver assist area set in advance in the surroundings of a vehicle. FIG. 4 to FIG. 6 are views for showing examples of scenes in which driver assist is performed. Note that, in FIG. 4 and FIG. 6, to prevent complication of the drawings, the driver assist area is shown only for one side of the vehicle 100.

As shown in FIG. 3, in the present embodiment, the driver assist area is made a region in front of and in back of the vehicle 100, that is, a region where there is a possibility of presence of some sort of moving object suddenly appearing in front of the vehicle 100. Note that, in the present embodiment, this driver assist area is switched to a first area or second area in accordance with the state of the driver. This point will be explained later.

Further, as explained above, in the present embodiment, if there is a pedestrian or two-wheeled vehicle, parked vehicle, or other specific object present in the driver assist area, at least one of steering assist and brake assist is performed as driver assist for avoiding collision due to that specific object.

For example, in the example shown in FIG. 4, a pedestrian walking on a sidewalk is present in the driver assist area on the road at the left side of the vehicle 100, therefore to avoid collision due to that pedestrian unexpectedly stepping out into the road, steering assist is performed so that the distance in the lateral direction (vehicle width direction) between the vehicle 100 and the pedestrian is enlarged. The vehicle 100 is made to move in the lateral direction to an extent not sticking out from its lane.

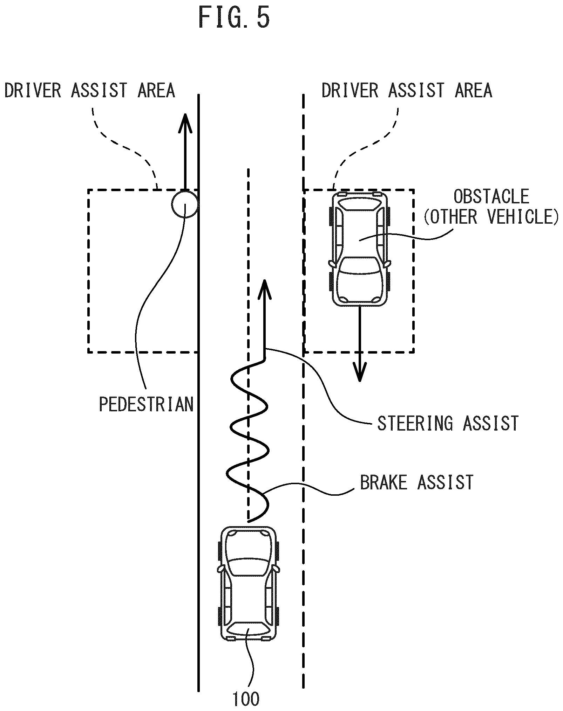

Further, for example, in the example shown in FIG. 5, a pedestrian walking on a sidewalk is present in the driver assist area on the road at the left side of the vehicle 100 and a pedestrian or two-wheeled vehicle, parked vehicle, running vehicle, or other obstacle (in this case, a running vehicle) is present in the adjoining lane at the right side of the vehicle 100 (in this example, oncoming lane). If, in this way, there is an obstacle present in the direction in which the host vehicle is made to move by steering assist (in this example, the right side) to avoid the pedestrian, considering the risk of collision with the pedestrian and obstacle, the amount of steering assist due to steering assist (amount of movement in lateral direction) is limited. For this reason, along with steering assist, brake assist is performed for slowing down the host vehicle.

Further, for example, in the example shown in FIG. 6, a pedestrian trying to cross the road is present in the driver assist area on the road at the right side of the vehicle 100, therefore brake assist is performed for avoiding collision with that pedestrian.

Here, after performing such driver assist, that is, after passing the specific object covered by the driver assist and ending the driver assist, the driver has to continue the driving operations on his own. If ending up performing driver assist without considering driving operations by the driver after performing driver assist, as explained below, new risks are liable to arise depending on the state of the driver at the time of performing driver assist.

That is, if at the time of performing driver assist, the driver is, for example, in a closed eye state, a certain extent of time is believed to become necessary until the driver awakes from the closed eye state to a state suitable for driving (for example, a state where driver grasps the situation in the surroundings of the vehicle 100 and is adopting a correct driving posture). For this reason, even if driver assist causes the driver to awake from the closed eye state, the driver is liable to not recover to a state suitable for driving before the driver assist ends. Further, the driver assist may well end with the driver still in the closed eye state.

As a result, for example, in FIG. 4 and FIG. 5, if ending up making the host vehicle greatly move to the right side so as to avoid a pedestrian, it is liable to be judged that the host vehicle had been made to enter the adjoining lane at the right side or overly leaned to the right side due to driving operations by the driver on his own after driver assist and conversely the driver ending up becoming liable to turn the steering wheel all the way to the left side or making the vehicle leave its own lane.

Therefore, when the driver is in the closed eye state at the time of driver assist, considering driving operations by the driver on his own after driver assist, it can be said to be preferable to keep down the amount of the steering assist.

On the other hand, if the driver were for example in the state of distracted driving at the time of driver assist, it is believed that the time required for the driver to recover from the state of distracted driving to a state suitable for driving would be short. Further, it is believed that there would be little possibility of the state of distracted driving continuing regardless of driver assist and therefore of driver assist ending in the state of distracted driving as is. For this reason, for example, in FIG. 4 and FIG. 5, even if making the host vehicle greatly move to the right side for avoiding a pedestrian, it is believed that there would be little possibility of the host vehicle ending up made to depart from its lane due to driving operations by the driver on his own after driver assist.

Further, if the driver is in a state of distracted driving, there is a possibility of his attention to the front of the vehicle 100 becoming spotty and of him not noticing the pedestrian in the front. For this reason, to avoid collision due to a pedestrian unexpectedly stepping out into the road, it is desirable to pass the side of the pedestrian with as much distance to the pedestrian as possible.

Therefore, when the driver is in the state of distracted driving at the time of driver assist, it can be said to be preferable to not keep down the amount of steering assist, but to increase the amount of steering assist as much as possible.

In this way, states unsuitable for driving include, for example, states such as the closed eye state where it is difficult to recover from that state to a state suitable for driving and, for example, states such as the state of distracted driving where it is easy to recover from that state to a state suitable for driving.

Further, as explained above, when in a state difficult to recover to a state suitable for driving, if considering driving operations by the driver on his own after driver assist, it is preferable to keep down the amount of the steering assist. On the other hand, when the state of the driver at the time of driver assist is the state of distracted driving, it can be said to be preferable to not keep down the amount of the steering assist but to increase it as much as possible. That is, when the state of the driver at the time of driver assist is a state not suitable for driving, if considering driving operations by the driver on his own after driver assist, it is preferable to change the amount of the steering assist in accordance with the ease of recovery from that state to a state suitable for driving.

Therefore, in the present embodiment, relating to steering assist, if the state of the driver at the time of driver assist is the closed eye state, the amount of the steering assist (amount of movement in the lateral direction) was made to become smaller than the amount of steering assist at the usual time when the state of the driver is a state suitable for driving. On the other hand, if the state of the driver at the time of driver assist is the state of distracted driving, the amount of steering assist was made to become greater than the amount of steering assist at the usual time.

Further, relating to brake assist, basically the lower the running speed of the vehicle 100, the more the difficulty of driving operations falls and the more occurrence of mistaken operations can be suppressed, therefore when the driver is in a state unsuitable for driving at the time of driver assist, regardless of the ease of recovery from that state to a state suitable for driving, the amount of brake assist (control force) was made greater than the amount of brake assist at usual times when the state of the driver was a state suitable for driving.

Note that, in the present embodiment, the amount of steering assist at usual times is made the average value of the amounts of movement in the lateral direction when avoiding specific objects if there are specific objects present in the driver assist area, for example, is set based on statistical data of running tests by a plurality of drivers etc. Further, the amount of brake assist at usual times is, for example, made a value by which the degree of deceleration of the vehicle 100 will not become greater than or equal to a predetermined first deceleration degree.

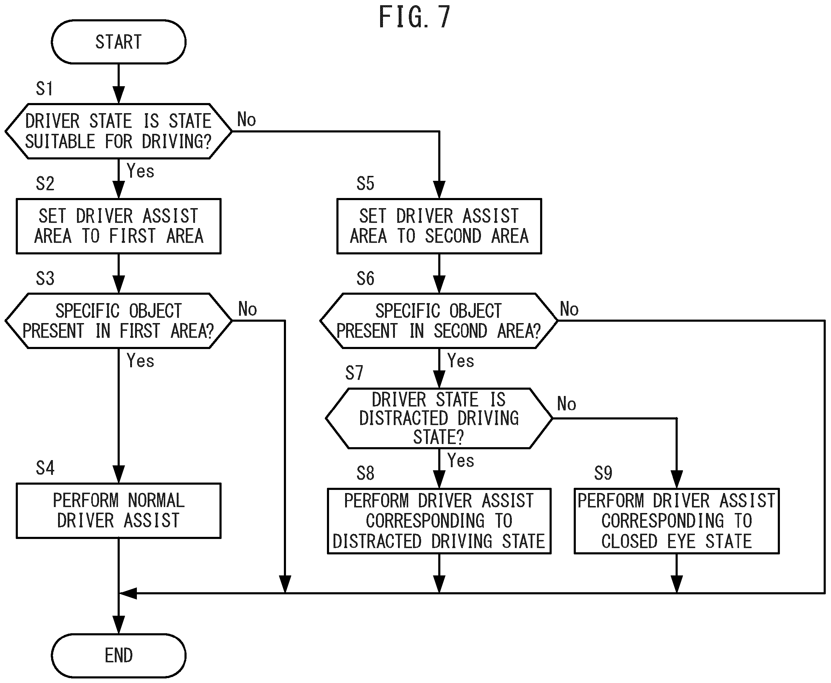

FIG. 7 is a flow chart for explaining control of driver assist according to the present embodiment performed by the driver assist part 74 and in turn the control device 6. The control device 6 repeatedly performs this routine at a predetermined processing cycle time ΔT.

At step S1, the control device 6 judges whether the driver is in a state suitable for driving. In the present embodiment, if the driver is not in the state of distracted driving nor in the closed eye state, the control device 6 judges that the driver is in a state suitable for driving and proceeds to the processing of step S2. On the other hand, if the driver is in the state of distracted driving or in the closed eye state, the control device 6 judges that the driver is in a state unsuitable for driving and proceeds to the processing of step S5.

At step S2, the control device 6 sets the driver assist area to a predetermined first area (see FIG. 2). The first area is the driver assist area set when the driver is in a state suitable for driving.

At step S3, the control device 6 judges whether there is an above-mentioned pedestrian or two-wheeled vehicle, parked vehicle, or other specific object present in the first area. If a specific object is present in the first area, the control device 6 proceeds to the processing of step S4. On the other hand, if there is no specific object in the first area, the control device 6 ends the current processing without performing driver assist.

At step S4, the control device 6 sets the amount of driver assist, that is, the amounts of steering assist and brake assist, to the amounts of assist of usual times and performs the driver assist.

At step S5, the control device 6 sets the driver assist area to a predetermined second area (see FIG. 2). The second area is the driver assist area set when the driver is in a state unsuitable for driving and is made an area obtained by expanding the first area to the front side in the vehicle front-back direction and the outside in the vehicle width direction. This because it is assumed that when the driver is in a state unsuitable for driving, the attention paid by the driver to the front of the vehicle 100 becomes spotty. For this reason, by expanding the driver assist area in this way, it is possible to make the timing of driver assist earlier, therefore it becomes easy to avoid collision with a specific object etc. in the driver assist area.

At step S6, the control device 6 judges whether there is the above-mentioned pedestrian or two-wheeled vehicle, parked vehicle, or other specific object present in the second area. If a specific object is present in the second area, the control device 6 proceeds to the processing of step S7. On the other hand, if there is no specific object in the second area, the control device 6 ends the current processing without performing driver assist.

At step S7, if the state of the driver is the state of distracted driving, the control device 6 proceeds to the processing of step S8, while if it the closed eye state, it proceeds to the processing of step S9.

At step S8, the control device 6 sets the amounts of steering assist and brake assist to the amounts of assist for the state of distracted driving and performs the driver assist.

The amount of steering assist for the state of distracted driving is set to a value larger than the amount of steering assist at usual times. The amount of brake assist for the state of distracted driving is also set to a value by which a degree of deceleration at the time of a brake operation becomes less than or equal to a second degree of deceleration larger than the first degree of deceleration so that deceleration with a degree of deceleration larger than usual brake assist becomes possible.

At step S9, the control device 6 sets the amounts of steering assist and brake assist to the amounts of assist for the closed eye state and performs the driver assist.

The amount of steering assist for the closed eye state is set to a value smaller than the usual amount of steering assist. On the other hand, the amount of brake assist for the closed eye state, like the amount of brake assist for the state of distracted driving, is set to a value by which a degree of deceleration at the time of a brake operation becomes less than or equal to a second degree of deceleration larger than the first degree of deceleration so that deceleration with a degree of deceleration larger than usual brake assist becomes possible.

The control device 6 of the vehicle 100 according to the present embodiment explained above is configured to perform driver assist accompanied with running control of the vehicle 100 when a specific object in the surroundings of the vehicle 100 is present in a driver assist area set in the surroundings of the vehicle 100 and, when the driver is in a state unsuitable for driving, to change the amount of steering assist included in the running control in accordance with the ease of recovery from that unsuitable state to a suitable state.

Specifically, the control device 6 of the vehicle 100 according to the present embodiment is configured to judge whether the state unsuitable for driving is the state of distracted driving (first state) or is the closed eye state (second state) in which it is more difficult to recover to a state suitable for driving than the state of distracted driving and, when the state unsuitable for driving is the state of distracted driving, to increase the amount of steering assist over the amount of steering assist at usual times when the driver is in a state suitable for driving and, when the state unsuitable for driving is the closed eye state, to make the amount of steering assist smaller than the amount of steering assist at usual times when the driver is in a state suitable for driving.

As explained above, after performing driver assist, a driver has to continue driving operations on his own. For this reason, if performing steering assist as driver assist and ending up making the vehicle 100 greatly move in the lateral direction when not considering driving operations performed by the driver on his own after performing driver assist and the driver is in a state unsuitable for driving and a state in which it is difficult to recover from that state to a suitable state, for example, a new risk of lane departure etc. is liable to arise due to driving operations by the driver on his own.

As opposed to this, according to the present embodiment, when the driver is in a state unsuitable for driving, considering driving operations by the driver on his own after driver assist, the amount of the steering assist is changed in accordance with the ease of recovery from that unsuitable state to a suitable state. For this reason, it is possible to keep down the occurrence of new risks due to driving operations by a driver on his own after driver assist.

Further, the control device 6 of the vehicle 100 according to the present embodiment is configured to make the amount of brake assist included in running control larger than the amount of brake assist when the driver is in a state suitable for driving regardless of whether the unsuitable state is the state of distracted driving (first state) or the closed eye state (second state) when the driver is in a state unsuitable for driving.

Due to this, when the driver is in a state unsuitable for driving, the running speed of the vehicle 100 after performing brake assist as driver assist can be lowered from the usual time, so it is possible to lower the difficulty of driving operations after driver assist and keep down the occurrence of mistaken operations. For this reason, it is possible to keep down the occurrence of new risks due to driving operations by a driver on his own after driver assist.

Above, an embodiment of the present invention was explained, but the above embodiment only shows some of the applications of the present invention. It is not meant to limit the technical scope of the present invention to the specific configuration of the above embodiment.

For example, in the above embodiment, the state of distracted driving is mentioned as one example of a state in which the driver easily recovers from a state unsuitable for driving to a suitable state, while a closed eye state is mentioned as one example of a state in which he would have more difficulty recovering to a suitable state than the state of distracted driving. The invention is not limited to such examples or combinations of the same.

Further, in the above embodiment, the computer program run at the control device 6 may be provided in a form recorded in a computer readable portable recording medium such as a semiconductor memory, magnetic recording medium or optical recording medium or may be provided as a computer program product.

## Claims

1. A control device (6) for a vehicle (100), wherein
the control device (6) is configured to:
perform driver assist accompanied with running control of the vehicle (100) when a specific object in surroundings of the vehicle (100) is present in a driver assist area set in the surroundings of the vehicle (100); and
change an amount of steering assist included in the running control in accordance with an ease of recovery from a state unsuitable for driving to a suitable state when a driver of the vehicle (100) is in an unsuitable state.

2. The control device (6) for a vehicle (100) according to claim 1, wherein
the control device (6) is configured to:
judge whether the unsuitable state is a predetermined first state or whether it is a second state more difficult to be recovered from to a state suitable for driving than the first state;
when the unsuitable state is the first state, make the amount of steering assist larger than the amount of steering assist performed when the driver is in a state suitable for driving; and,
when the unsuitable state is the second state, make the amount of steering assist smaller than the amount of steering assist performed when the driver is in a state suitable for driving.

3. The control device (6) for a vehicle (100) according to claim 2, wherein
the control device (6) is configured to make the amount of brake assist included in the running control when the driver is in the state unsuitable for driving, regardless of whether the unsuitable state is the first state or the second state, greater than the amount of brake assist performed when the driver is in a state suitable for driving.

4. The control device (6) for a vehicle (100) according to claim 2 or claim 3, wherein
the first state is a state of distracted driving where the driver is driving distracted and
the second state is a closed eye state where the driver has closed his eyes.

5. The control device (6) of a vehicle (100) according to any one of claims 1 to 4, wherein
the control device (6) is configured to, when the unsuitable state is a state where the driver is driving distracted, make the amount of steering assist greater than the amount of steering assist performed when driver is in a state suitable for driving.

6. The control device (6) for a vehicle (100) according to any one of claims 1 to 5, wherein
the control device (6) is configured to, when the unsuitable state is a closed eye state where the driver has closed his eyes, make the amount of steering assist smaller than the amount of steering assist performed when driver is in a state suitable for driving.

7. A control method for a vehicle (100), wherein
the control method comprises;
performing driver assist accompanied with running control of the vehicle (100) when a specific object in surroundings of the vehicle (100) is present in a driver assist area set in the surroundings of the vehicle (100); and
changing an amount of steering assist included in the running control in accordance with an ease of recovery from a state unsuitable for driving to a suitable state when a driver of the vehicle (100) is in an unsuitable state.

8. A computer program for making a computer perform processing for:
performing driver assist accompanied with running control of a vehicle (100) when a specific object in surroundings of the vehicle (100) is present in a driver assist area set in the surroundings of the vehicle (100); and
changing an amount of steering assist included in the running control in accordance with an ease of recovery from a state unsuitable for driving to a suitable state when a driver of the vehicle (100) is in an unsuitable state.
